# EUROPEAN PATENT APPLICATION

(11) **EP 3 514 437 A1**
(43) Date of publication of application: **24.07.2019**
(21) Application number: 18199561.4
(22) Date of filing: 10.10.2018
(51) Int. Cl.: F16P 3/14

(54) **SAFETY MONITORING SYSTEM, SAFETY MONITORING METHOD AND SAFETY MONITORING PROGRAM**

(30) Priority: 22.01.2018 JP 2018008044
(71) Applicant: OMRON CORPORATION, Kyoto-shi, Kyoto 600-8530 (JP)
(72) Inventor: SHOJI, Takeshi, Kyoto 600-8530 (JP); TANI, Yoshiharu, Kyoto 600-8530 (JP)
(74) Representative: Becker Kurig Straus

(57) **Abstract**

Provided is an intrusion detection method that achieves both safety of the worker and high work productivity of the robot (50). A safety monitoring system (1) includes: a light projector (10, 10A, 10C) in which a plurality of first light emitting elements (101, 101A) that emit light of a first wavelength and a plurality of second light emitting elements (102, 102A) that emit light of a second wavelength different from the first wavelength are arranged; an imaging part (20, 20B) capturing an image of the light projector (10, 10A, 10C); an imaging processing part (30) performing intrusion detection of an object based on the image captured by the imaging part (20, 20B); and a robot control part (40) generating a signal for controlling movement of a robot (50) from a result of performing the intrusion detection. The light projector (10, 10A, 10C) is arranged on a boundary line of danger prediction for the movement of the robot (50). The first wavelength is visible light.

## Description

### BACKGROUND

### Technical Field

The disclosure relates to a technique of providing an intrusion detection method with consideration of safety.

### Description of Related Art

The intrusion detection apparatus in the configuration described in Patent Document 1 (Japanese Laid-Open No. 2015-66664) captures images of a plurality of light emitters by an imaging part and determines whether an object intrudes into an intrusion detection area based on the captured images. In addition, the intrusion detection apparatus in the configuration described in Patent Document 2 (Japanese Patent No. 5924134) arranges a plurality of light sources in a straight line to detect intrusion of an object into the intrusion detection area.

### SUMMARY

However, when the configurations of Patent Document 1 and Patent Document 2 are used, one type of light source is used. Thus, it is difficult to achieve both the robustness against ambient light in the detection of intruding objects and the visibility of boundary lines for monitoring intrusion. Particularly, in the case where the used light source is infrared light and the intruding object is a person (worker), it is difficult to recognize the boundary line for the intrusion detection area and therefore the problem that the worker enters the work area of the robot by mistake may occur.

As a result, the robot is stopped by the robot safety control function, etc., and the productivity drops.

Accordingly, the disclosure provides an intrusion detection method that allows the worker to recognize the boundary for stopping the robot, and achieves both the safety of the worker and high productivity of the robot.

A safety monitoring system of the disclosure includes: a light projector in which a plurality of first light emitting elements that emit light of a first wavelength and a plurality of second light emitting elements that emit light of a second wavelength different from the first wavelength are arranged; an imaging part capturing an image of the light projector; an imaging processing part performing intrusion detection of an object based on the image captured by the imaging part; and a robot control part generating a signal for controlling movement of a robot from a result of performing the intrusion detection.

The light projector is arranged on a boundary line of danger prediction for the movement of the robot, and the first wavelength is visible light.

In this configuration, by including visible light in the boundary line between the robot and the worker, the boundary for intrusion detection can be recognized, the safety of the worker is maintained, and the movement of the robot is not limited. Thus, the work efficiency can be improved.

In some embodiments, the second wavelength in the safety monitoring system of the disclosure may be infrared light.

With this configuration, the robustness against ambient light can be improved.

In some embodiments, in the safety monitoring system of the disclosure, the first light emitting elements and the second light emitting elements may be arranged in a predetermined order on the boundary line.

In this configuration, the visible light of the first wavelength and the visible light of the second wavelength are arranged to make it possible to reliably recognize the boundary for intrusion detection.

In some embodiments, the imaging processing part in the safety monitoring system of the disclosure may perform an image process based on pattern matching on a light quantity projected from the second light emitting elements to perform the intrusion detection.

With this configuration, intrusion of the worker can be detected.

In some embodiments, the imaging processing part in the safety monitoring system of the disclosure may define a threshold value of the light quantity and perform the intrusion detection based on a change with the threshold value as a reference.

With this configuration, intrusion of the worker can be more reliably detected.

According to the disclosure, it is possible to provide an intrusion detection method that achieves both the safety of the worker and high work efficiency of the robot.

### BRIEF DESCRIPTION OF THE DRAWINGS

FIG. 1 is a circuit block diagram of a safety monitoring system according to the first embodiment of the disclosure.
FIG. 2A is a schematic view from a lateral side of the safety monitoring system according to the first embodiment of the disclosure.
FIG. 2B is a schematic view from the top side of the safety monitoring system according to the first embodiment of the disclosure.
FIG. 3 is a flowchart of the safety monitoring system according to the first embodiment of the disclosure for detecting an object.
FIG. 4A is a schematic view from a lateral side of the safety monitoring system according to the second embodiment of the disclosure.
FIG. 4B is a schematic view from the top side of the safety monitoring system according to the second embodiment of the disclosure.
FIG. 5 is a schematic view from a lateral side of the safety monitoring system according to the third embodiment of the disclosure.
FIG. 6 is a schematic view from a lateral side of the safety monitoring system according to the fourth embodiment of the disclosure.
FIG. 7A is a schematic view from a lateral side of the safety monitoring system according to the fifth embodiment of the disclosure.
FIG. 7B is a schematic view from the top side of the safety monitoring system according to the fifth embodiment of the disclosure.
FIG. 8A is a schematic view from a lateral side of the safety monitoring system according to the sixth embodiment of the disclosure.
FIG. 8B is a schematic view from the top side of the safety monitoring system according to the sixth embodiment of the disclosure.

### DESCRIPTION OF THE EMBODIMENTS

### Application Example

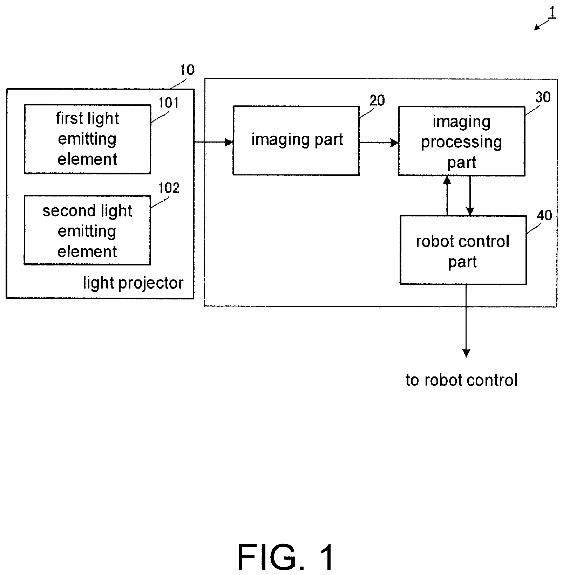

First, an example using the disclosure will be described with reference to FIG. 1. FIG. 1 is a circuit block diagram of a safety monitoring system according to the first embodiment.

As shown in FIG. 1, the safety monitoring system 1 includes a light projector 10, an imaging part 20, an imaging processing part 30, and a robot control part 40.

The light projector 10 includes a first light emitting element 101 and a second light emitting element 102 that have light emitting elements such as LEDs. The first light emitting element 101 and the second light emitting element 102 are arranged in a predetermined arrangement pattern. The light projector 10 is disposed on a boundary line for danger prediction between a work area (hereinafter, "robot work area RS") where a robot works and a worker 60.

The first wavelength at which the light of the first light emitting element 101 emits and the second wavelength at which the light of the second light emitting element 102 emits have different frequency bands. The light of the first wavelength is visible light and the light of the second wavelength is infrared light. That is, the first light emitting element 101 is provided for improving the visibility of the worker, and the second light emitting element 102 is provided considering the robustness against ambient light.

The imaging part 20 captures an image of the light projector 10. The imaging part 20 outputs the captured image to the imaging processing part 30.

The imaging processing part 30 performs an image process on a light emission pattern by a pattern matching method. When detecting that the worker crosses the light projector 10 and intrudes into the robot work area RS based on the result of the image process, the imaging processing part 30 outputs a stop command to the robot control part 40.

The robot control part 40 stops the robot with the input of the stop command from the imaging processing part 30.

Since the light of the first wavelength outputted from the first light emitting element 101 is visible light, the robot work area, i.e., the intrusion detection area, is easy to recognize visually and unnecessary robot control is prevented. Then, the safety of the worker and improvement of work productivity of the robot can both be achieved.

### Configuration Example 1

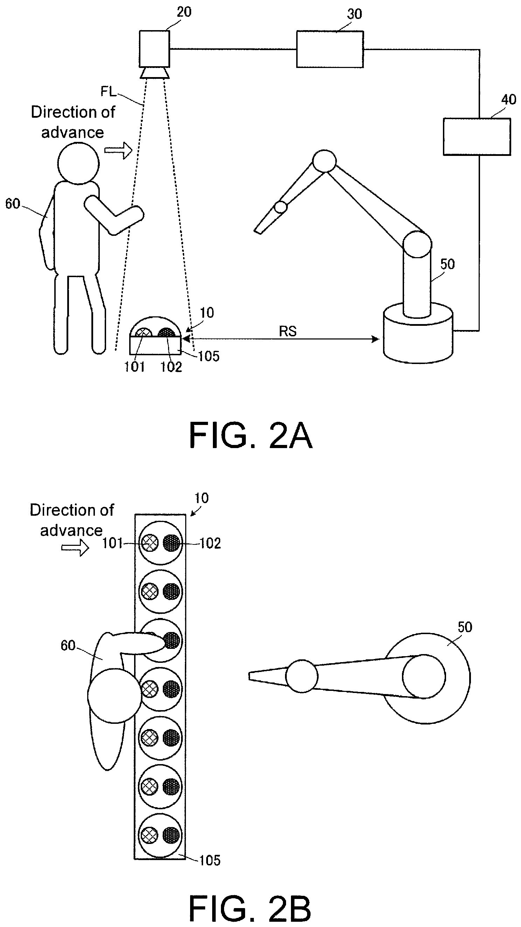

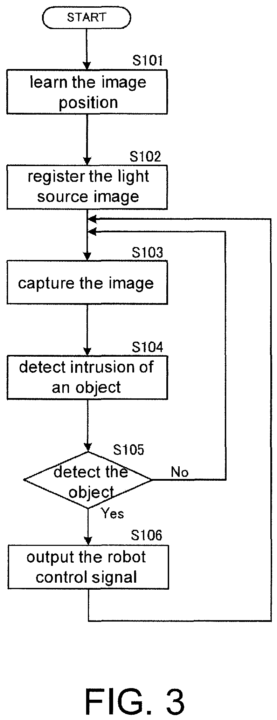

As described above, FIG. 1 is a circuit block diagram of the safety monitoring system according to the first embodiment of the disclosure. FIG. 2A is a schematic view from a lateral side of the safety monitoring system according to the first embodiment of the disclosure. FIG. 2B is a schematic view from the top side of the safety monitoring system according to the first embodiment of the disclosure. FIG. 3 is a flowchart of the safety monitoring system according to the first embodiment of the disclosure for detecting an object.

Based on the configuration of FIG. 1, a specific monitoring configuration will be described with reference to FIG. 2A and FIG. 2B. As described above, the safety monitoring system I includes the light projector 10, the imaging part 20, the imaging processing part 30, and the robot control part 40. The robot control part 40 is connected to a robot 50.

The imaging part 20 is arranged to face the light projector 10. Further, an imaging range FL of the imaging part 20 is set to cover the entire light projector 10. The imaging part 20 captures an image of an initial state of the light projector 10 (hereinafter, initial image) and outputs it to the imaging processing part 30. The imaging processing part 30 stores the state of the image of the initial state.

The light projector 10 is formed of the first light emitting element 101, the second light emitting element 102. and a tape 105. The first light emitting element 101 and the second light emitting element 102 are, for example, LEDs and are arranged in a predetermined pattern on the front surface of the tape 105.

In the present embodiment, the first light emitting element 101 and the second light emitting element 102 are arranged as a group in a straight line, and the area between the light projector 10 and the robot 50 is the robot work area RS.

As described above, the first wavelength of the first light emitting element 101 is visible light. As a result, it is easy for the worker 60 to recognize the first light emitting element 101. In other words, it is easy for the worker 60 to recognize the robot work area RS.

Thus, unnecessary intrusion of the worker 60 into the robot work area RS can be prevented. Furthermore, by disposing the first light emitting element 101 on the side of the worker 60, the worker can visually recognize the vicinity outside the boundary that is actually for performing intrusion detection. In other words, unintentional intrusion of the worker into the robot work area RS can be more reliably prevented.

In addition, the second wavelength of the second light emitting element 102 is infrared light. That is, the light emitted by the second light emitting element 102 has high robustness against ambient light. As a result, the imaging part 20 can easily detect that the worker 60 intrudes into the robot work area RS and can perform the detection accurately.

Next, a method of detecting the worker 60 in the case where the worker 60 intrudes into the robot work area RS will be described.

The imaging part 20 captures an image of a state where the worker 60 overlaps the light projector 10 in the imaging range FL (hereinafter, intrusion state). The imaging part 20 outputs the image of the intrusion state to the imaging processing part 30.

The imaging processing part 30 compares the initial image with the image of the intrusion state and performs the image process. The pattern matching method is used for the image process. More specifically, correlation base matching (template matching) may be used. The imaging processing part 30 calculates luminance, which serves as reference, from the image of the initial state and uses the luminance as a threshold value.

The imaging processing part 30 determines that the worker 60 intrudes into the robot work area RS and outputs a signal to the robot control part 40.

The robot control part 40 receives the signal. The robot control part 40 outputs a stop signal to the robot 50.

In addition, the robot control part 40 does not output the stop signal when the signal is not received. As a result, the robot 50 can continue the work.

A procedure of the robot control in the above configuration will be described in more detail with reference to the flowchart of FIG. 3.

The imaging processing part 30 learns the initial image of the light projector 10 captured by the imaging part 20 (step S101). The initial image uses the position of the light projector 10 in the imaging range FL and is defined by the coordinates or shape.

The imaging processing part 30 registers the light projector 10, i.e., the first light emitting element 101 and the second light emitting element 102 (step S102). At this time, the imaging processing part 30 may at least register the second light emitting element 102.

In other words, steps S101 and S102 are steps of initializing the image process for detecting the intrusion state.

The imaging part 20 captures the image of the light projector 10 and outputs the captured result to the imaging processing part 30 (step S103).

The imaging processing part 30 performs the image process (such as a pattern) by using the initial image and the image captured in step S103, and detects intrusion into the robot work area RS (step S104).

When detecting that an object intrudes into the robot work area RS (step S105: Yes), the imaging processing part 30 outputs a robot control signal for stopping the robot 50 to the robot control part 40 (step S106). Thereafter, the imaging part 20 repeats the process from the step of capturing an image (step S103).

If the imaging processing part 30 does not detect intrusion of the object into the robot work area RS (step S105: No), the imaging processing part 30 repeats the process from the step of capturing an image (step S103).

As described above, the robot control signal in step S106 may be a signal that not only stops the robot 50 but also slows down the robot 50.

By executing such processing, a system that ensures the safety of the worker 60 and does not lower the work efficiency of the robot 50 can be constructed.

Furthermore, by using such a configuration, the worker 60 can clearly recognize the robot work area RS. In other words, it is possible to prevent unintentional intrusion of the worker 60 into the robot work area RS due to insufficient visibility of the light projector 10, which is the boundary line.

Moreover, even if the worker 60 intrudes into the robot work area RS, the movement of the robot 50 can be controlled to ensure the safety of the worker 60.

The first wavelength of the first light emitting element 101 may be in a range of about 380 nm to about 750 nm, which is the frequency band of visible light, for example. The second wavelength of the second light emitting element 102 may be in a range of about 760 nm to about 940 nm, for example. The frequency bands of the first wavelength and the second wavelength are generally in the above ranges but not limited thereto if they are in a frequency band range that can be captured by the imaging part 20.

Further, in the above configuration, the image captured by the imaging part 20 may be a still image or a video.

### Configuration Example 2

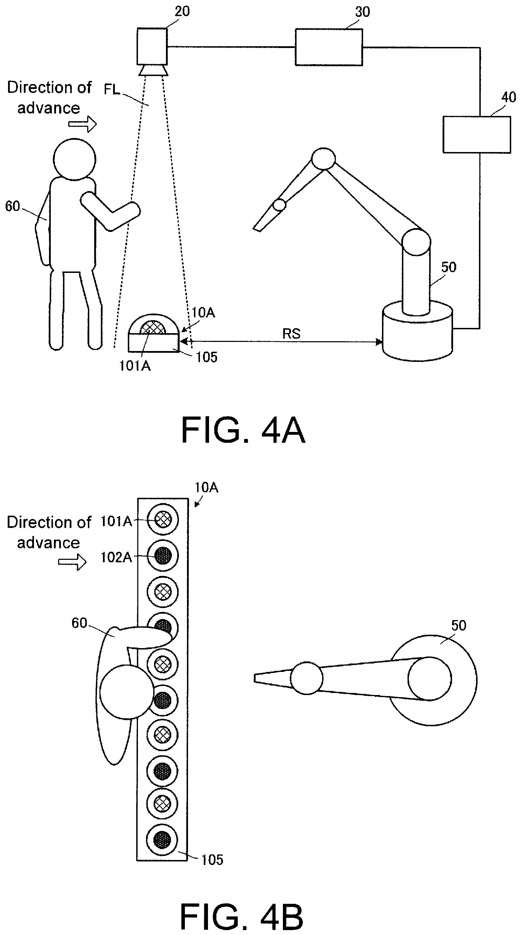

Next, an overview of the safety monitoring system according to the second embodiment will be described with reference to FIG. 4A and FIG. 4B. FIG. 4A is a schematic view from a lateral side of the safety monitoring system according to the second embodiment of the disclosure. FIG. 4B is a schematic view from the top side of the safety monitoring system according to the second embodiment of the disclosure.

The second embodiment differs from the first embodiment in the arrangement of positions of a first light emitting element 101A and a second light emitting element 102A. The other aspects of the second embodiment are the same as those of the first embodiment and thus descriptions of the same portions are omitted.

As shown in FIG. 4A and FIG. 4B, a light projector 10A includes the first light emitting element 101A, the second light emitting element 102A, and the tape 105.

The first light emitting element 101A and the second light emitting element 102A are disposed in a straight line to be alternately arranged on the tape 105.

This configuration also allows the worker 60 to clearly recognize the robot work area RS. In other words, it is possible to prevent unintentional intrusion of the worker 60 into the robot work area RS due to insufficient visibility of the light projector 10A, which is the boundary line.

Furthermore, when the worker 60 intrudes into the robot work area RS, the movement of the robot 50 can be controlled to ensure the safety of the worker 60.

### Configuration Example 3

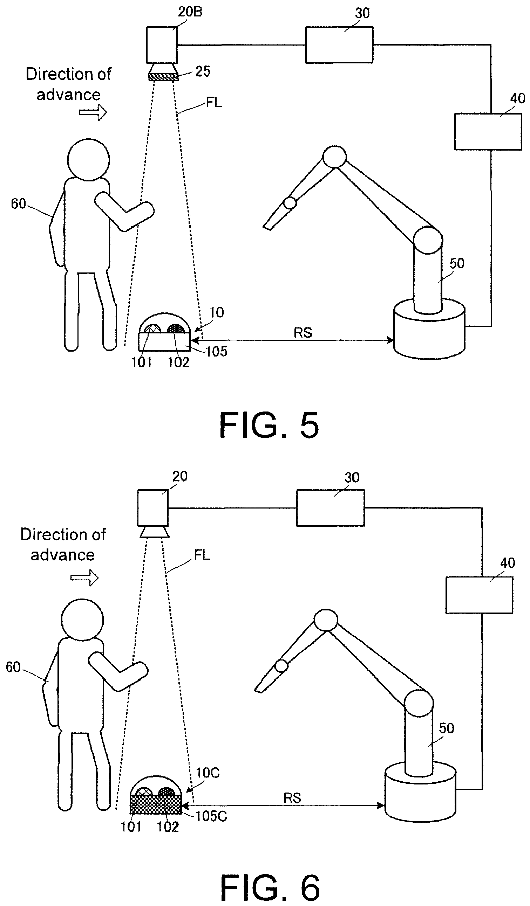

Next, an overview of the safety monitoring system according to the third embodiment will be described with reference to FIG. 5. FIG. 5 is a schematic view from a lateral side of the safety monitoring system according to the third embodiment of the disclosure.

The third embodiment differs from the first embodiment in that a band pass filter 25 is provided in an imaging part 20B. The other aspects of the third embodiment are the same as those of the first embodiment and thus descriptions of the same portions are omitted.

As shown in FIG. 5, the imaging part 20B includes the band pass filter 25. The band pass filter 25 allows the second wavelength of the second light emitting element 102 to pass, and attenuates or blocks the first wavelength of the first light emitting element 101.

This configuration also allows the worker 60 to clearly recognize the robot work area RS. In other words, it is possible to prevent unintentional intrusion of the worker 60 into the robot work area RS due to insufficient visibility of the light projector 10, which is the boundary line.

Furthermore, by providing the imaging part 20B with the band pass filter 25, the robustness against ambient light can be further improved and the image captured by the imaging part 20B can be more reliably analyzed. In other words, when the worker 60 intrudes into the robot work area RS, the movement of the robot 50 can be controlled to ensure the safety of the worker 60.

### Configuration Example 4

Next, an overview of the safety monitoring system according to the fourth embodiment will be described with reference to FIG. 6. FIG. 6 is a schematic view from a lateral side of the safety monitoring system according to the fourth embodiment of the disclosure.

The fourth embodiment differs from the first embodiment in that a light projector 10C is provided with a tape 105C. The other aspects of the fourth embodiment are the same as those of the first embodiment and thus descriptions of the same portions are omitted.

As shown in FIG. 6, in the light projector 10C, the first light emitting element 101 and the second light emitting element 102 are disposed on the tape 105C. The tape 105C has lower luminance than the tape 105 in the first embodiment.

By setting a large difference between the luminance of the color of the tape 105C and the luminance of the first wavelength at which the light of the first light emitting element 101 emits, the contrast ratio is increased. In other words, the worker 60 can more clearly recognize the first light emitting element 101. Further, by increasing the difference with respect to the luminance of the second light emitting element 102, it is possible to easily identify the second light emitting element 102 and perform more accurate detection.

This configuration also makes it possible to prevent unintentional intrusion of the worker 60 into the robot work area RS due to insufficient visibility of the light projector 10, which is the boundary line.

### Configuration Example 5

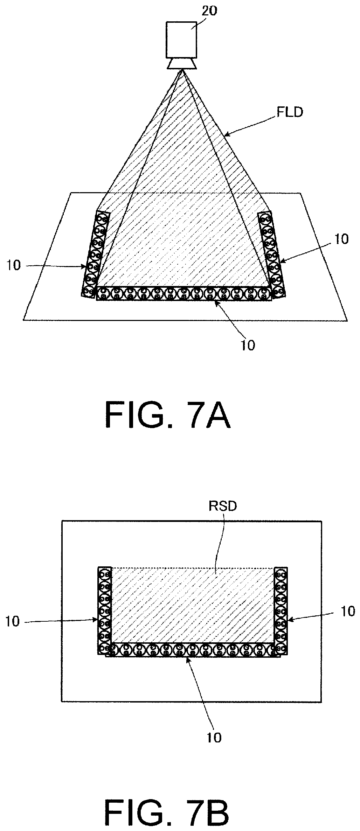

Next, an overview of the safety monitoring system according to the fifth embodiment will be described with reference to FIG. 7A and FIG. 7B. FIG. 7A is a schematic view from a lateral side of the safety monitoring system according to the fifth embodiment of the disclosure. FIG. 7B is a schematic view from the top side of the safety monitoring system according to the fifth embodiment of the disclosure.

The fifth embodiment differs from the first embodiment in that a plurality of light projectors 10 are combined and arranged so that a planar robot work area RSD is formed. The other aspects of the fifth embodiment are the same as those of the first embodiment and thus descriptions of the same portions are omitted.

As shown in FIG. 7A and FIG. 7B. the light projectors 10 are arranged to surround the robot work area RSD. More specifically, at two ends of one light projector 10 serving as one side, two light projectors 10 are arranged to extend in the same direction to serve as two sides, so as to form the robot work area RSD. In other words, the boundary of the robot work area RSD has a shape similar to a substantially U shape.

In addition, the imaging part 20 is arranged so that the range for imaging is an imaging range FLD.

This configuration also allows the worker 60 to clearly recognize the robot work area RSD. In other words, it is possible to prevent unintentional intrusion of the worker 60 into the robot work area RSD due to insufficient visibility of the light projectors 10, which are the boundary line.

Furthermore, when the worker 60 intrudes into the robot work area RSD, the movement of the robot 50 can be controlled to ensure the safety of the worker 60.

As described above, in the present embodiment, the boundary of the robot work area RSD is surrounded with the light projectors 10 on three sides. However, if the planar robot work area RSD can be defined, the robot work area RSD may be composed of two sides or four sides using the light projectors 10.

### Configuration Example 6

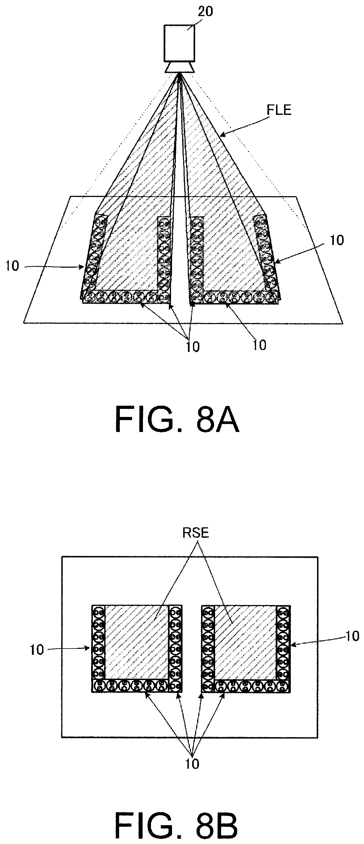

Next, an overview of the safety monitoring system according to the sixth embodiment will be described with reference to FIG. 8A and FIG. 8B. FIG. 8A is a schematic view from a lateral side of the safety monitoring system according to the sixth embodiment of the disclosure. FIG. 8B is a schematic view from the top side of the safety monitoring system according to the sixth embodiment of the disclosure.

The sixth embodiment differs from the first embodiment in that a plurality of light projectors 10 are combined and arranged so that a plurality of planar robot work areas RSE are formed. The other aspects of the sixth embodiment are the same as those of the first embodiment and thus descriptions of the same portions are omitted.

As shown in FIG. 8A and FIG. 8B. the light projectors 10 are arranged to surround the robot work areas RSE. More specifically, at two ends of one light projector 10 serving as one side, two light projectors 10 are arranged to extend in the same direction to serve as two sides, so as to form the robot work areas RSE. In other words, the boundary of each robot work area RSE has a shape similar to a substantially U shape.

In addition, the imaging part 20 is arranged so that the range for imaging is an imaging range FLE.

This configuration also allows the worker 60 to clearly recognize the robot work areas RSE. In other words, it is possible to prevent unintentional intrusion of the worker 60 into the robot work areas RSE due to insufficient visibility of the light projectors 10, which are the boundary line.

Furthermore, when the worker 60 intrudes into the robot work areas RSE, the movement of the robot 50 can be controlled to ensure the safety of the worker 60.

As described above, in the present embodiment, the boundary of the robot work area RSE is surrounded with the light projectors 10 on three sides. However, if the planar robot work area RSE can be defined, the robot work area RSE may be composed of two sides or four sides using the light projectors 10.

The above configurations illustrate examples where the robot work area is fixed. However, lighting may be set on and off depending on the light emission pattern of the first light emitting element and the second light emitting element to dynamically define the robot work area.

It is to be noted that the disclosure is not limited to the configurations of the above embodiments, and changes may be made to a combination of these embodiments.

### [Description of the Reference Signs]

1: safety monitoring system
10, 10A, 10C: light projector
20, 20B: imaging part
25: band pass filter
30: imaging processing part
40: robot control part
50: robot
60: worker
101, 101A: first light emitting element
102, 102A: second light emitting element
105, 105C: tape
FL, FLD, FLE: imaging range
RS, RSD, RSE: robot work area
S101, S102, S103, S104, S105, S106: step

## Claims

1. A safety monitoring system (1), **characterized by** comprising:
a light projector (10, 10A, 10C) in which a plurality of first light emitting elements (101, 101A) that emit light of a first wavelength and a plurality of second light emitting elements (102, 102A) that emit light of a second wavelength different from the first wavelength are arranged;
an imaging part (20, 20B) capturing an image of the light projector (10, 10A, 10C);
an imaging processing part (30) performing intrusion detection of an object based on the image captured by the imaging part (20, 20B); and
a robot control part (40) generating a signal for controlling movement of a robot (50) from a result of performing the intrusion detection,
wherein the light projector (10, 10A, 10C) is arranged on a boundary line of danger prediction for the movement of the robot (50), and
the first wavelength is visible light.

2. The safety monitoring system (1) according to claim 1, wherein the second wavelength is infrared light.

3. The safety monitoring system (1) according to claim 1, wherein the first light emitting elements (101, 101A) and the second light emitting elements (102, 102A) are arranged in a predetermined order on the boundary line.

4. The safety monitoring system (1) according to any one of claims 1 to 3, wherein the imaging processing part (30) performs an image process based on pattern matching on a light quantity projected from the second light emitting elements (102, 102A) to perform the intrusion detection.

5. The safety monitoring system (1) according to claim 4, wherein the imaging processing part (30) defines a threshold value of the light quantity and performs the intrusion detection based on a change with the threshold value as a reference.

6. A safety monitoring method, **characterized in that** the safety monitoring method causes a computer to execute:
capturing an image of a light projector (10, 10A, 10C) by an imaging part (20, 20B), wherein in the light projector (10, 10A, 10C), a plurality of first light emitting elements (101, 101A) that emit light of a first wavelength and a plurality of second light emitting elements (102, 102A) that emit light of a second wavelength different from the first wavelength are arranged;
performing intrusion detection of an object based on the image captured by the imaging part (20, 20B); and
generating a signal for controlling movement of a robot (50) from a result of performing the intrusion detection,
wherein the light projector (10, 10A, 10C) is arranged on a boundary line of danger prediction for the movement of the robot (50), and
the first wavelength is visible light.

7. A safety monitoring program, **characterized in that** the safety monitoring program causes a computer to execute:
capturing an image of a light projector (10, 10A, 10C) by an imaging part (20, 20B), wherein in the light projector (10, 10A, 10C), a plurality of first light emitting elements (101, 101A) that emit light of a first wavelength and a plurality of second light emitting elements (102, 102A) that emit light of a second wavelength different from the first wavelength are arranged;
performing intrusion detection of an object based on the image captured by the imaging part (20, 20B); and
generating a signal for controlling movement of a robot (50) from a result of performing the intrusion detection,
wherein the light projector (10, 10A, 10C) is arranged on a boundary line of danger prediction for the movement of the robot (50), and
the first wavelength is visible light.
